## Europäisches Patentamt
## European Patent Office
## Office européen des brevets

(19)

(11) Publication number: **0 040 928**
**B1**

(12)

# EUROPEAN PATENT SPECIFICATION

(45) Date of publication of patent specification: **19.09.84**

(51) Int. Cl.³: **G 01 N 1/24, G 05 D 16/00**

(21) Application number: **81302133.4**

(22) Date of filing: **13.05.81**

(54) **Gas sampler.**

(30) Priority: **14.05.80 GB 8015942**

(43) Date of publication of application:
**02.12.81 Bulletin 81/48**

(45) Publication of the grant of the patent:
**19.09.84 Bulletin 84/38**

(84) Designated Contracting States:
**GB**

(56) References cited:
**DE-A-2 822 697**
**FR-A-2 438 291**
**GB-A-1 556 791**

**The file contains technical information
submitted after the application was filed and
not included in this specification**

(73) Proprietor: **ROTHEROE & MITCHELL LIMITED
Victoria Road
Ruislip Middlesex (GB)**

(72) Inventor: **Jobson, Peter
Lyndhurst Hardwick
Aylesbury Buckinghamshire (GB)**
Inventor: **Wildey, Frank Alexander
11 North View
Eastcote Pinner Middlesex (GB)**

(74) Representative: **Paget, Hugh Charles Edward
et al
MEWBURN ELLIS & CO. 2/3 Cursitor Street
London EC4A 1BQ (GB)**

EP 0 040 928 B1

## Description

The present invention relates to a gas sampler and more particularly to a gas sampler whose speed is controlled in dependence upon the pressure across a valve, e.g. in order to obtain a constant volume flow rate. A particular use of such a sampler is to draw air through a filter.

It is known to manufacture a gas sampler using a pump and a valve to draw the gas through a filter, thereby to obtain a sample of the impurities present in the gas (e.g. dust) on the filter. The valve regulates the flow of gas through the filter. Such apparatus has the disadvantage that, if the filter becomes blocked, the pump may continue to run and an incorrect sampling time is recorded. Also, the known devices generally do not provide a stable flow, through the filter and therefore cause the sampling rate to vary with time. This may lead to an inaccurate result. Where such a sampling device is used to monitor the exposure of a person to possibly harmful gases, inaccurate recording of the amount of gas passed through the filter makes the results useless.

A gas sampler is disclosed in GB—A—1,556,791 in which the pump is controlled in dependence on the pressure across the valve. A pressure actuated switch detects the pressure and the signal from the pressure actuated switch is integrated before being used to control the pump. A reservoir is provided between the pump and the valve to smooth the gas flow.

The sampler disclosed in DE—A—2,822,697 is similar to that of GB—A—1,556,791 but in order to smooth the gas flow, the reservoir is replaced by a pulsation filter. This comprises a diaphragm arranged in parallel with the valve and the pressure activated switch and constrictions are provided in the connection between the valve and the diaphragm and between the diaphragm and the pressure activated switch. If a pressure pulse appears between the pump and the valve, the transmission of the pulse to the pressure activated switch is first delayed by the constriction between the valve and the diaphragm and then the diaphragm absorbs the pulse so that no pressure pulses pass to the pressure activated switch. The sampler disclosed in FR—A—2,438,291 is similar to that in DE—A—2,822,697 except there is also a bypass valve connected in parallel with the pump to enable the sampler to be operable for both high and low air flows.

GB—A—1,556,791, DE—A—2,822,697 and FR—A—2,438,291 are all primarily intended for use with a variable drive multicylinder air pump but GB—A—1,556,791 and FR—A—2,438,291 mention that the pump may be a rotary pump. It had been thought that if a rotary pump was used with the sampler, the result would be too large and heavy for practical use due to the higher power requirement of such a pump.

It has now been found unexpectedly that the use of a rotary pump together with integration of the signal from the pressure activated switch provides a sufficiently stable flow to enable it to be used in a sampler without means for smoothing the flow. Hence the reservoir or pulsation filter can be omitted and a sampler be obtained with the output of the rotary pump being received directly by the valve and the pressure activated switch detecting directly the pressure between the rotary pump and the valve as claimed in claim 1. The result is a gas sampler of simple construction with a highly stable flow.

The integrator smooths the regulator fluctuations in working pressure which are present even when a rotary pump is used. The use of a rotary pump has the further advantage that such pumps become blocked by impurities in the gas less easily than other pumps.

Preferably a detector detects when the pressure across the valve is less than a predetermined value for a predetermined time, and a counter counts the time the pump is running, the detector being adapted to stop the counter when said predetermined time has elapsed until the pressure across the valve has risen to said predetermined value.

A control system is thus provided to stop the counter. There may also be provided a visual indication of when the system malfunctions due to insufficient flow through the valve.

An embodiment of the present invention will now be described in detail, by way of example, with reference to the accompanying drawings, in which:—

Fig. 1 shows schematically an embodiment of a gas sampler according to the present invention;

Fig. 2 is a circuit diagram of a battery circuit for the sampler of Fig. 1;

Fig. 3 is a block diagram of the control system for the sampler of Fig. 1;

Fig. 4 is a circuit diagram of a motor control circuit of the control system shown in Fig. 3;

Fig. 5 is a circuit diagram of a fault detection arrangement for the control system shown in Fig. 3; and

Fig. 6 is a circuit diagram of a timing circuit of the control system shown in Fig. 3.

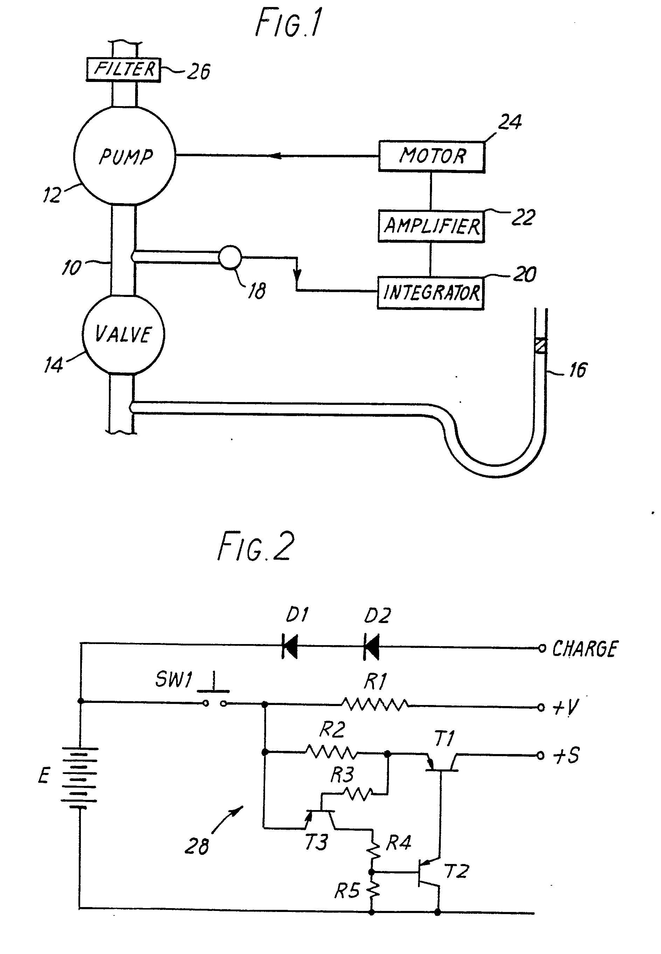

Referring first to Fig. 1, the gas sampler has a conduit 10 through which the gas to be sampled is drawn by means of a rotary pump 12. The flow rate of the gas through the conduit 10 is controlled by a valve 14 which may, for example, be a manually adjusted needle valve. To provide a visual indication of the flow rate, a manometer 16 is connected downstream of the valve 14. It is preferable, however, that the flow rate should be calibrated by use of an accurate flow gauge (not shown) before the sampler is used. Thus the manometer 16 acts as an indication that flow is present, rather than an accurate display.

Variations in flow of the gas in the conduit 10 occur due to the operation of the pump 12. The use of a rotary vane pump minimises these variations, and also has the advantage of ease of maintenance. The variations in flow are detected across the valve 14 by a pressure switch 18. This switch 18 opens and closes in dependence on the pressure in the conduit 10, and is adapted to close when the pressure of the gas in the conduit 10 rises above a predetermined value. The position of this switch 18 is detected, then integrated and inverted by an integrator 20. The output of the integrator 20 is fed to an amplifier 22 which controls the speed of rotation of a motor 24. The pump 12 is connected directly to the motor 24. Hence the pump 12 is regulated by the position of the switch 18. If the switch 18 is open or closed for equal lengths of time, the output of the integrator will be constant and the motor speed will be constant. If the switch 18 is open for longer than it is closed, for example, due to a pressure drop in the conduit 10, the integrator 20 gives a positive output which causes the motor to speed up the pump 12, thereby increasing the flow. Similarly, if the switch 18 is closed for longer than it is open, the pump 12 is slowed down, to reduce the flow. Thus, a stabilized flow is provided in the conduit 10.

The motor may be a low inertia, skew-wound, ironless DC motor which operates at speeds between 1000 and 2500 rpm. The pump may be a three bladed rotary vane pump.

In use of this gas sampler a filter 26 is connected to the inlet of the conduit 10, to collect impurities or dust particles in the sampled gas.

The whole device is for instance carried by a person working in a place where there is harmful dust, which is collected on the filter for subsequent analysis. To determine the person's exposure, it is necessary to know accurately the amount of gas passing through the filter and the time of operation of the sampler. For this a steady flow rate is required.

Referring now to Fig. 2, the gas sampler is powered by a battery E which provides two outputs, one being a voltage +V through a resistor R1 and the second being a voltage +S through a current limiter circuit 28. The current limiter circuit 28 comprises, in a known way, three transistors T1 to T3 and four resistors R2 to R5. The current limiter circuit ensures that the current to the control system is not more than 250 mA, thereby preventing the generation of a spark should the circuit fail. A switch SW1 is provided to isolate completely the battery E. The battery E may be rechargeable and charging is then achieved through diodes D1 and D2. It is not necessary to provide a stabilizing circuit for the battery E because any fluctuations in pump speed due to changes in battery voltage are compensated for by the motor control circuit formed by the switch 18, the integrator 20 and the amplifier 22.

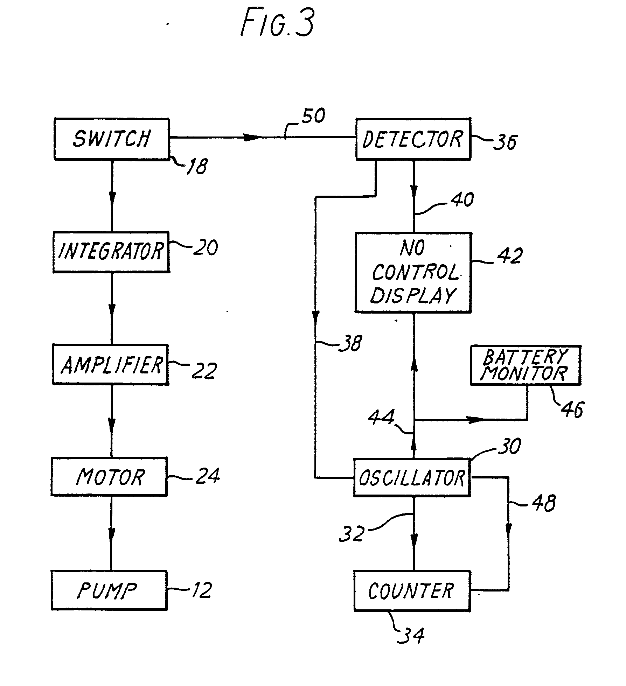

The sampler is controlled by a control circuit shown schematically in Fig. 3. The operation of the sensor 18, integrator 20, amplifier 22 and motor 24 have already been described in connection with Fig. 1.

The control circuit is regulated by an oscillator 30, preferably constructed using CMOS components to minimise power consumption. The oscillator 30 produces pulses which are divided to produce pulses at minute intervals which are fed via line 32 to a counter 34. The counter 34 drives a display (not shown), preferably a light emitting diode (hereinafter abbreviated to LED) display which provides a visual indication of elapsed time.

If the gas being sampled ceases to flow through the conduit 10, or if the pump control system is overloaded, the pressure switch 18 ceases to close. This is detected by a detector circuit 36 which supplies a signal via line 38 to the oscillator 30. This signal inhibits the signal from the oscillator 30 to the counter 34. Thus, if the gas flow ceases, the counter 34 is stopped. The display of the counter 34 thus provides an accurate indication of the time that the gas sampler has been operating correctly. The detector 36 also supplies a signal, via line 40 to a "No control" circuit 42 which activates a warning device to indicate that flow has ceased. This warning device may be an LED which is arranged to flash by connecting it to the oscillator 30 via line 44. Alternatively, or in addition to the LED, an audible alarm may be provided.

A circuit 46 detects the battery voltage and provides a display when the battery voltage falls below a predetermined level. This display may be provided by a second LED which is arranged to flash by connecting it to the oscillator 30 via line 44. An audible alarm may be provided in a similar way to the "No Control" circuit 42.

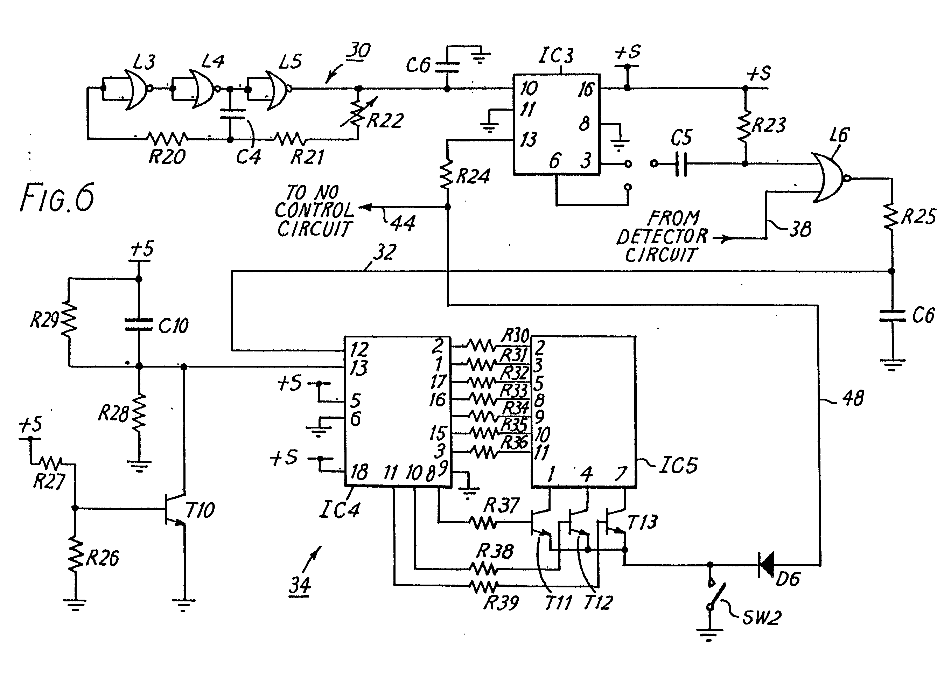

In operation, the counter 34 is started by moving the main on/off switch (not shown) to "on" and the motor 24 runs to drive the pump 12. Unless the gas flow falls below a desired value or unless the battery voltage falls, the counter 34 counts minutes throughout the sampling operation. Movement of the on/switch to "off" stops the counter 34 and the pump 12 but does not cancel the stored time. The display may then be read when required by activation of a switch SW2 (seee Fig. 6) in a line 48 between the oscillator 30 and the counter 34. A small amount of current is required to store the sampling time in the counter 34 but this is sufficiently low (about 4 mA) that the battery life in this state is sufficiently long for most purposes. With the fully charged 1.2 ampere-hour nickel cadmium cells forming the battery E, the display may be stored for about ten days. The stored time may be cancelled by disconnecting the battery E from the rest of the circuit i.e. by opening switch SW1.

The device should preferably be made compact. This may be achieved by mounting the pressure switch 18, and the valve directly onto the pump 12, or by connecting the valve to the pump by short lengths of suitable tubing. All the electronic components may be mounted on a single circuit board and the battery secured under this board. To provide a device which is resistant to external damage, the components of the sampling pump may be housed in a housing made, for example, of stainless steel. The only external features of the housing are the manometer, the LED display, the on and off switch, the battery switch SW1, and the inlet of the conduit 10. To prevent accidental operation, the switches may be recessed in the housing.

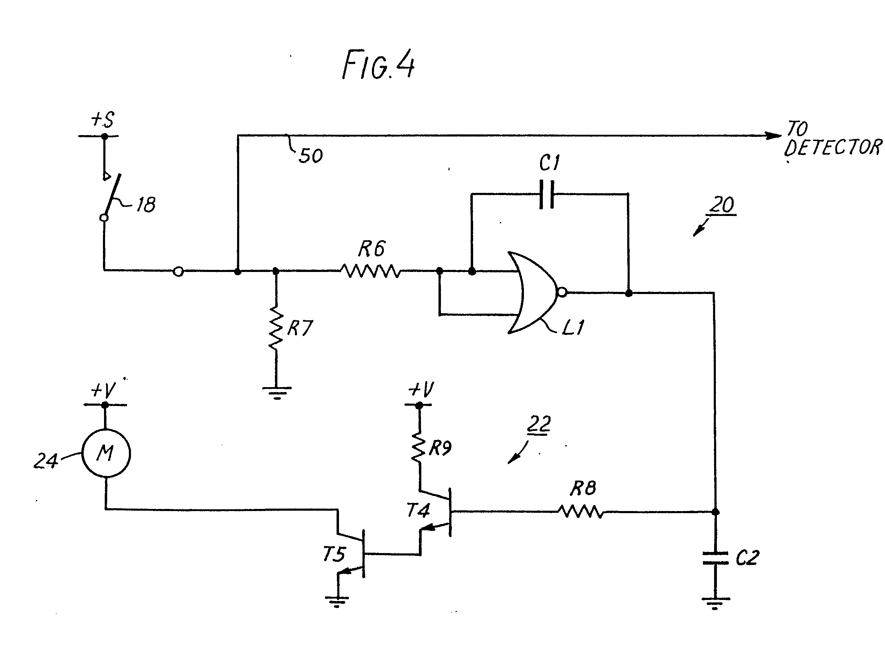

The motor control circuit is shown in more detail in Fig. 4. The integrator 20 comprises a capacitor C1, resistors R6 and R7 and a logic element L1 in the form of a NOR gate. The integrator 20 is connected across the stabilized voltage +S via the pressure switch 18. Thus the fluctuations in the position of the switch 18 are integrated by the integrator 20 which therefore provides a decreasing output when the switch 18 is closed for longer than it is open and an increasing output when the switch 18 is open for longer than it is closed. The switch 18 is also connected to the detector 26 via line 50. The output of the integrator 20 is fed to the amplifier 22 comprising capacitor C2, resistors R8 and R9 and transistors T4 and T5. Thus the output from the integrator 20 is fed to the base electrode of transistor T4 which is connected to the base electrode of transistor T5. The emitter of tansistor T5 is earthed whilst the collector electrode of transistor T5 is connected to the voltage +V via the motor 24. Thus fluctuations in the conductivity of transistor T5, which conductivity is determined by the emitter current of transistor T4, cause fluctuations in the voltage appearing across the motor 24. The speed of the motor 24 is thus regulated.

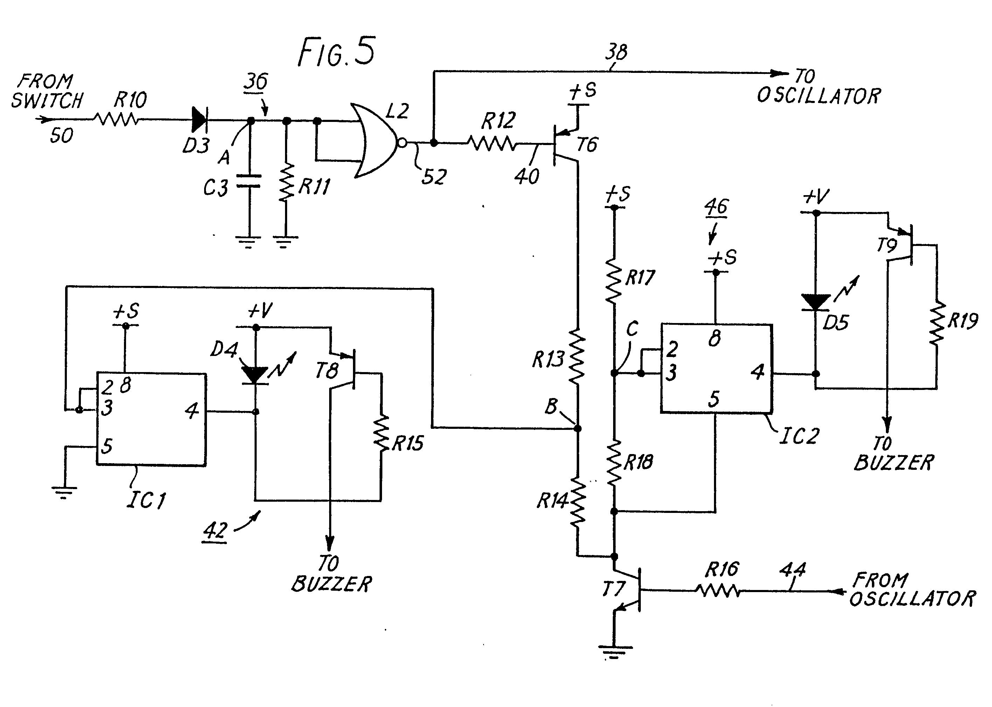

Figure 5 shows the detector 36, the "No Control" circuit 42 and the battery monitor in more detail. The input to the detector 36 is from the switch 18 via the line 50. The detector 36 comprises resistors R10 and R11, diode D4, capacitor C3 and logic element L2. If the switch 18 is open, an input is provided to logic element L2 through resistor R10 and diode D3. This charges the capacitor C3, and since the logic element L2 is a NOR gate, results in no output on the line 52. Provided that the potential at point A is sufficiently high, the NOR gate L2 will not give any output. Therefore, if the switch 18 opens, the initial potential at point A, due to the charge on the capacitor C3, is sufficient to prevent an output from NOR gate L2. The capacitor C3 then discharges through resistor R11 (and not though R10 due to diode D3) and the potential at point A therefore falls exponentially with time.

If the switch 18 closes again before the potential at point A has fallen sufficiently to cause an output from NOR gate L2, then the capacitor C3 is recharged and the situation returns to its original state. This is the case when the switch 18 is opening and closing due to fluctuations of the pressure in the conduit 10. If, however, the switch 18 ceases to close (due for example to blockage of the filter 26) then the capacitor C3 discharges sufficiently for the potential at A to fall below a predetermined threshold such that the NOR gate outputs a signal on line 52. This is the "No Control" signal.

The "No Control" signal is fed to the oscillator 30, the the line 38 and also via line 40 and resistor R12 to the base electrode of transistor T6. Transistor T6 is connected in series with resistors R13 and R14 and transistor T7 across the voltage +S from the battery circuit. Therefore, when a signal is applied to transistor T6 via line 40, transistor T6 is rendered conductive and this raises the potential at point B between resistors R13 and R14. The potential at point B is monitored by an integrated circuit IC1 which compares the potential at B with the voltage +S and when the difference between these potentials falls sufficiently, activates an LED D4. The LED D4 thus may provide a visual indication of the "No Control" signal. Simultaneously a signal may be provided via resistor R15 and transistor T8 to a buzzer (not shown).

The base electrode of transistor T7 receives a signal from the oscillator 30 via line 44 containing a resistor R16. If a voltage appears on line 44, this renders transistor T7 conductive and reduces the potential at point B. Since the signal on line 44 oscillates, this causes the potential at B to oscillate and hence the LED D4 flashes.

Transistor T7 is also connected in series with resistors R17 and R18 across voltage +S. The potential at point C between resistors R17 and R18 is monitored by integrated circuit IC2 which provides an output to a LED D5 which therefore flashes when the battery voltage falls below a predetermined value. Diode D5 may be connected across transistor T9 and R19 in a similar way to diode D4, or alternatively, diode D5 may be connected to transistor T8 and R15. Diode D5 flashes due to the oscillating signal applied to the base electrode of T7 and this provides a visual indication to show when the battery power is low. Once diode D5 is illuminated, the sampler should be turned off completely (by opening SW1) and the battery then recharged.

The oscillator 30 as shown in Fig. 6 has three logic gates L3, L4 and L5 which are interconnected via resistors R20, R21 and R22 and capacitor C4 in a known way to produce a square wave signal oscillating at a predetermined frequency (e.g. 273.1 Hz). This frequency may be varied e.g. by $\pm 10\%$ by varying the resistance of resistor R22. The output of logic element L5 is fed to an integrated circuit IC3 which divides this frequency by a predetermined number (e.g. $2^{14}$) and produces pulses at minute intervals which are fed to a logic element L6, via capacitor C5. Capacitor C5 is also connected in series with resistor R23 between an output of the integrated circuit IC3 and voltage +S. Integrated circuit IC3 also supplies a second output via resistor R24 to line 44 to transistor T7 and also via line 48 and diode D to the counter 34. This signal may be of a lower frequency than the signal supplied to logic elements L6, e.g. pulses at half second intervals. Capacitor C6 is a decoupling capacitor.

Logic element L6 is a NOR gate which also receives an input via line 38 from the detector circuit 36. A signal on line 38 inhibits NOR gate LC6 and hence stops the counter 34. Thus, when the detector 36 determines that the switch 18 has ceased to close, the counter is stopped as no pulses pass from IC3.

If NOR gate LC6 is not inhibited, then pulses are passed via resistor R25 and line 34 to an input of an integrated circuit IC4. Resistor R24 is also connected via a capacitor C6 to earth.

The peripheral circuit of IC4 comprises resistors R26 and R27 connected in series across voltage +S, the mid point of resistors R26 and R27 being connected to the base electrode of a transistor T10. The emitter electrode of transistor T10 is earthed whilst its collector electrode is connected to integrated circuit IC4 to earth via resistor R28 and to voltage +S via resistor R29 and capacitor C7 connected in parallel.

The counter 34 counts the pulses on line 32 and records the number of minutes elapsed in integrated circuit IC5 which is connected to a three digit LED display (not shown) (integrated circuit IC5 being connected to integrated circuit IC4 by resistors R30 to R36, one for each of the segments of each of the LED displays). To provide a visual indication of the count total (either during counting or later) switch SW2 may be closed, which earths the emitter electrodes of transistors T11, T12 and T13, each of which has its collector electrode connected to one of the digits of the display via integrated circuit IC5. Transistors T11 to T13 have their base electrodes connected via resistors R37 to R39 to integrated circuit IC4. Closing switch SW2 illuminates the LED display and provides a visual indication of the number of minutes the counter 34 has been running i.e. the number of minutes the pump 12 has been running minus the number of minutes for which the device was in a "No Control" state.

A gas sampler according to the present invention may thus provide a compact and reliable device which provides stable flow over a range of conditions e.g. temperature, flow rate and with a low power requirement.

## Claims

1. A gas sampler comprising a rotary pump (12) and a valve (14), the pressure across the valve (14) being detected by a pressure actuated switch (18), the position of which is detected so as to provide an input to an integrator (20), the rotary pump (12) being controlled in dependence upon the output of the integrator (20); characterised in that: the valve (14) receives directly the output of the rotary pump (12), and the pressure actuated switch (18) detects directly the pressure between the rotary pump (12) and the valve (14).

2. A gas sampler according to claim 1, further including a detector (36) which detects when the pressure across the valve (14) is less than a predetermined level for a predetermined time, and a counter (34) which counts the time the rotary pump (12) is running, the detector being adapted to stop the counter (34) when said predetermined time has elapsed until the pressure across the valve (14) has risen to said predetermined value.

## Revendications

1. Appareil pour prélever des échantillons de gaz comprenant une pompe rotative (12) et une valve (14), la pression à travers la valve (14) étant détectée par un commutateur sensible à la pression (18), dont la position est détectée afin d'appliquer un signal à un intégrateur (20), la pompe rotative (12) étant commandée selon la sortie de l'intégrateur (20); caractérisé en ce que: la valve (14) reçoit directement la sortie de la pompe rotative (12) et le commutateur sensible à la pression (18) détecte directement la pression entre la pompe rotative (12) et la valve (14).

2. Appareil pour prélever des échantillons de gaz selon la revendication 1, comprenant de plus un détecteur (36) qui détecte le moment où la pression à travers la valve (14) est inférieure à un seuil prédéterminé pendant un temps prédéterminé, et un compteur (34) qui compte le temps pendant lequel la pompe rotative (12) fonctionne, le détecteur pouvant arrêter le compteur (34) quand ledit temps prédéterminé s'est écoulé jusqu'à ce que la pression à travers la valve (14) ait atteint ladite valeur prédéterminée.

## Patentansprüche

1. Gasprobennehmer mit einer Rotationspumpe (12) und einem Ventil (14), bei dem der über dem Ventil (14) herrschende Druck durch einen druckbetätigten Schalter (18) erfaßt wird dessen Stellung zur Lieferung eines Eingangssignals für einen Integrator (20) erfaßt wird, wobei die Rotationspumpe (12) in Abhängigkeit von dem Ausgangssignal des Integrators (20) gesteuert wird, dadurch gekennzeichnet, daß das Ventil (14) den Ausstoß der Rotationspumpe (12) unmittelbar aufnimmt, und der druckmittelbetätigte Schalter (18) unmittelbar den Druck zwischen der Rotationspumpe (12) und den Ventil (14) erfaßt.

2. Gasprobennehmer nach Anspruch 1, der ferner einen Detektor (36) aufweist, der feststellt, wenn der über dem Ventil (14) herrschende Druck für eine vorbestimmte Zeit kleiner ist als ein vorbestimmter Pegel, und einen die Laufzeit der Rotationspumpe (12) zählenden Zähler (34), wobei der Zähler (34) durch den Detektor anhaltbar ist, wenn die vorbestimmte Zeit verstrichen ist, bis der über dem Ventil (14) herrschende Druck auf den vorbestimmten Wert angestiegen ist.

## FIG.1

## FIG.2

FIG.3

FIG.4

FIG.5

FIG.6